# EUROPEAN PATENT APPLICATION

(11) **EP 4 563 494 A1**
(43) Date of publication of application: **04.06.2025**
(21) Application number: 23845387.2
(22) Date of filing: 18.07.2023
(51) Int. Cl.: B65D 90/00, B65D 88/52

(54) **CONTAINER AND HYDROGEN PRODUCTION SYSTEM**

(30) Priority: 29.07.2022 CN 202210909694; 29.07.2022 CN 202221995611 U; 29.07.2022 CN 202221998227 U
(71) Applicant: Wuxi Longi Hydrogen Technology Co., Ltd., Wuxi, Jiangsu 214135 (CN)
(72) Inventor: ZHANG, Ke, Wuxi, Jiangsu 214135 (CN); ZHU, Chen, Wuxi, Jiangsu 214135 (CN); JI, Ce, Wuxi, Jiangsu 214135 (CN); JU, Panlong, Wuxi, Jiangsu 214135 (CN)
(74) Representative: Pfenning, Meinig & Partner mbB
(86) International application number: PCT/CN2023/107972
(87) International publication number: WO 2024/022175

(57) **Abstract**

The present invention provides a container and a hydrogen production system. The container includes a bottom base, an upper cover, a first side plate, and a driving device. The first side plate is arranged between the bottom base and the upper cover, and is connected to the bottom base and the upper cover separately; and the driving device is connected to the first side plate and is configured to drive the first side plate to rotate relative to the bottom base, and the first side plate drives the upper cover to move, to switch the container from a closed state to an open state. The container in the present invention can implement hoisting of a device, so that a process in which the device is placed in the container is simplified, and the design efficiency of the hydrogen production system is improved. **In** addition, it is convenient for personnel to enter the container for device overhaul and maintenance, thereby effectively resolving the problem of inconvenient maintenance on the device after the device is placed in the container.

## Description

### CROSS-REFERENCE TO RELATED APPLICATIONS

The present disclosure claims priority to Chinese Patent Application No. 202210909694.5, filed with the China National Intellectual Property Administration on July 29, 2022 and entitled "CONTAINER AND HYDROGEN PRODUCTION SYSTEM", Chinese Patent Application No. 202221995611.0, filed with the China National Intellectual Property Administration on July 29, 2022 and entitled "HYDROGEN PRODUCTION STATION", and Chinese Patent Application No. 202221998227.6, filed with the China National Intellectual Property Administration on July 29, 2022 and entitled "AIR CIRCULATION DEVICE AND CONTAINER", which are incorporated herein by reference in their entireties.

### TECHNICAL FIELD

The present invention relates to the field of hydrogen production technologies, and in particular, to a container and a hydrogen production system.

### BACKGROUND

Energy is an important material basis for human survival and development. The shortage of conventional energy supply and over-exploitation of fossil energy put China's energy system under multiple pressure. How to achieve efficient and environmentally friendly development and utilization of renewable energy has become a key project in China. Hydrogen energy has attracted extensive attention from the new energy industry due to its advantages such as zero pollution, zero discharge, and no secondary pollution.

At present, main sources of hydrogen include hydrogen production from fossil energy, industrial by-product hydrogen, and hydrogen production from water electrolysis, where hydrogen production from alkaline water electrolysis is a low-cost and technologically mature hydrogen production manner and is highly favored by the industry. A system for hydrogen production from alkaline water electrolysis includes a plurality of hydrogen production devices such as a large electrolytic cell, an alkaline liquor circulating pump, a control device, and a gas-liquid separating device, which occupies a large area and space, bringing huge challenge to plant construction and transportation and packaging of the hydrogen production system.

In the related art, although a large container has been used to transport and package the system for hydrogen production from alkaline water electrolysis, a conventional container can hardly bear a weight of an electrolytic cell with a hydrogen production capacity of more than 1000 standard cubic meters and usually needs to be transported separately from the electrolytic cell, and then assembled on site to construct the hydrogen production system. In addition, a commonly used container generally has a single-side opening structure, which is not convenient to hoisting the electrolytic cell. Besides, due to small internal space of the conventional container and insufficient extended space after the single-side opening is opened, operating space for workers in the container is quite limited, which is not conducive to overhaul and maintenance on the hydrogen production devices in the container.

### SUMMARY

In view of this, embodiments of the present invention provide a container and a hydrogen production system, to at least resolve the problems that existing containers cannot implement hoisting of a device and inconvenient maintenance on the device after the device is placed in the container.

To achieve the foregoing objectives, the present invention adopts the following technical solutions:
The present invention discloses a container, including a bottom base, an upper cover, a first side plate, and a driving device, where
the first side plate is arranged between the bottom base and the upper cover, and is connected to the bottom base and the upper cover separately; and
the driving device is connected to the first side plate and is configured to drive the first side plate to rotate relative to the bottom base, and the first side plate drives the upper cover to move, to switch the container from a closed state to an open state.

Optionally, the container further includes a second side plate, and the upper cover includes a first cover plate and a second cover plate;
the second side plate is arranged opposite to the first side plate, and is connected to the bottom base and the upper cover separately; and
the driving device is connected to the second side plate and is configured to drive the second side plate to rotate relative to the bottom base, and the second side plate drives the upper cover to move, to switch the container from the closed state to the open state, where
the first side plate is connected to the first cover plate to drive the first cover plate to move, and the second side plate is connected to the second cover plate to drive the second cover plate to move.

Optionally, the driving device includes a first driving mechanism and a second driving mechanism; and
the first driving mechanism is connected to the first side plate, and the second driving mechanism is connected to the second side plate.

Optionally, seal gaskets are arranged on opposite surfaces of the first cover plate and the second cover plate.

Optionally, the first side plate is hingedly connected to the first cover plate, and the second side plate is hingedly connected to the second cover plate.

Optionally, the container further includes a first linkage mechanism and a second linkage mechanism;
the first linkage mechanism includes the first side plate and the first cover plate, and the second linkage mechanism includes the second side plate and the second cover plate; and
during rotation of the first side plate and the second side plate, the first cover plate and the second cover plate are in a horizontal state.

Optionally, the first linkage mechanism further includes a first fixing rod and a first connecting rod, and the second linkage mechanism further includes a second fixing rod and a second connecting rod;
the first side plate, the first fixing rod, the first connecting rod, and the first cover plate are hingedly connected to each other sequentially, where the first fixing rod is fixedly connected to the bottom base; and
the second side plate, the second fixing rod, the second connecting rod, and the second cover plate are hingedly connected to each other sequentially, where the second fixing rod is fixedly connected to the bottom base.

Optionally, the container further includes a mounting frame, and the bottom base, the upper cover, the first side plate, the second side plate, and the driving device are all mounted on the mounting frame;
the driving device is a hydraulic cylinder including a cylinder sleeve and a piston rod arranged in the cylinder sleeve; and
the cylinder sleeve is fixedly connected to the mounting frame, and the piston rod is fixedly connected to the first side plate and the second side plate separately.

Optionally, the mounting frame includes four vertical columns and two cross beams;
every two of the four vertical columns are arranged opposite to each other, and the two cross beams are arranged between the opposite vertical columns and are fixedly connected to the vertical columns; and
the two cross beams are parallel to each other and are located at a bottom portion of the mounting frame.

Optionally, the mounting frame further includes a reinforcing beam, and the reinforcing beam is arranged between the opposite vertical columns and is fixedly connected to the vertical columns; and
the reinforcing beam is parallel to the cross beams and is located at the bottom portion of the mounting frame.

The present invention further discloses a hydrogen production system, including an electrolytic cell and the container according to any one of the foregoing, where the electrolytic cell is placed in the container.

Optionally, the container further includes a mounting frame and an end plate; and
the end plate is arranged at an end portion at which the electrolytic cell is located, and the end plate is movably connected to the mounting frame.

Optionally, the hydrogen production system further includes a first support member and a second support member;
the first support member and the second support member are arranged opposite to each other at two ends of the electrolytic cell and are configured to support the electrolytic cell; and
the first support member is fixedly connected to the mounting frame, and the second support member is movably connected to the mounting frame.

Optionally, the second support member is slidably connected to the mounting frame.

Optionally, an insulating layer is arranged on a surface of the first support member abutting against the electrolytic cell and a surface of the second support member abutting against the electrolytic cell, or an insulating plate is arranged between the electrolytic cell and each of the first support member and the second support member.

Optionally, the container includes at least two layers of container bodies, the hydrogen production system further includes a gas-liquid separator, and the electrolytic cell and the gas-liquid separator are arranged in container bodies at different layers.

Optionally, the container includes a first container body and a second container body, the first container body and the second container body are stacked, and the first container body is located at a bottom layer; and
the electrolytic cell is arranged in the first container body, and the gas-liquid separator is arranged in the second container body.

Optionally, the hydrogen production device further includes a scrubber, the scrubber is arranged in the second container body and is connected to the gas-liquid separator, and the scrubber is configured to scrub gas from the gas-liquid separator.

Optionally, the hydrogen production system further includes an escalator, and the escalator extends to an end portion of the second container body; and
an access door is arranged at a position on the end portion of the second container body close to the escalator.

Optionally, the hydrogen production device further includes an alkaline liquor cooler and an alkaline liquor circulating pump; and
the alkaline liquor cooler and the alkaline liquor circulating pump are both arranged in the container body at the same layer and in communication with the electrolytic cell.

Optionally, the electrolytic cell, the alkaline liquor cooler, and the alkaline liquor circulating pump are horizontally arranged in the first container body sequentially.

Optionally, the hydrogen production device further includes a control device, and the control device is arranged between the alkaline liquor cooler and a side wall of the first container body.

Optionally, the first container body includes a first accommodating portion and a second accommodating portion;
the electrolytic cell is arranged in the first accommodating portion, and the alkaline liquor cooler and the alkaline liquor circulating pump are both arranged in the second accommodating portion; and
an access door is arranged on a side of the first accommodating portion close to the second container body, and an access door is arranged on a side wall of the second accommodating portion.

Optionally, a projection of the second container body along a vertical direction is located in the second accommodating portion.

Optionally, the second accommodating portion is in communication with an interior of the second container body.

Optionally, a size of the first container body along a horizontal direction ranges from 12 m to 13 m, and a size of the first container body along a vertical direction ranges from 2 m to 3 m.

Optionally, the hydrogen production system further includes an air circulation device, and the air circulation device is configured to communicate air in the container with external air.

Optionally, the air circulation device includes a ventilation pipeline and a reversing device;
the reversing device is arranged at an end portion of the ventilation pipeline, an air duct for air circulation is formed between the reversing device and the ventilation pipeline, and the air duct is configured to provide circulating ventilation for the container;
the reversing device is provided with a plurality of air openings, and the reversing device switches between the different air openings to cause the air circulation device to be in an interior circulation state or an exterior circulation state; and
in the interior circulation state, the air in the container is isolated from the external air, and in the exterior circulation state, the air in the container is in communication with the external air.

Optionally, the plurality of air openings include a first air opening, a second air opening, a third air opening, and a fourth air opening;
the first air opening and the second air opening are opposite to each other, and the third air opening and the fourth air opening are opposite to each other;
the first air opening is configured to be in communication with the container, the third air opening is configured to be in communication with the ventilation pipeline, and the second air opening and the fourth air opening are configured to be in communication with the external air;
in the interior circulation state, the first air opening is in communication with the third air opening, and the second air opening is in communication with the fourth air opening; and
in the exterior circulation state, the first air opening is in communication with the fourth air opening, and the second air opening is in communication with the third air opening.

Optionally, the second air opening and the third air opening are each connected to a filter screen.

Optionally, the air circulation device further includes a heating device; and
the heating device is in communication with the ventilation pipeline, and in the interior circulation state, the heating device heats air in the air duct.

Optionally, the air circulation device further includes a fan; and
the fan is in communication with the ventilation pipeline, and the fan is configured to draw air from the air openings.

Optionally, the ventilation pipeline is a vertical pipeline, and the heating device and the fan are both arranged on a side of the ventilation pipeline close to ground.

Optionally, the reversing device includes a housing and a reversing plate; and
the reversing plate is arranged in the housing and is rotatably connected to the housing, and the reversing plate rotates in the housing to communicate different air openings with each other.

Optionally, in the interior circulation state or the exterior circulation state, two ends of the reversing plate abut against an inner wall of the housing.

Optionally, seal gaskets are arranged at the two ends of the reversing plate.

Compared with the related art, the container and the hydrogen production system described in the present invention have the following advantages:
In the container of the present invention, the upper cover is driven by the first side plate to move, so that the container can be switched from the closed state to the open state, thereby implementing hoisting of a device, greatly simplifying a process of placing the device in the container, and improving the design efficiency of the hydrogen production system. In addition, when the container is in the open state, personnel can directly enter the container along the upper cover to perform overhaul and maintenance on the device in the container, thereby effectively resolving the problem of inconvenient maintenance on the device after the device is placed in the container.

The hydrogen production system in the present invention has the same advantages relative to the related art as the container, and details are not described herein again.

### BRIEF DESCRIPTION OF THE DRAWINGS

The accompanying drawings constituting a part of the present invention are used to provide further understanding of the present invention, and the exemplary embodiments of the present invention and descriptions thereof are used to explain the present invention but do not constitute an improper limitation on the present invention. In the accompanying drawings:
FIG. 1 is a schematic diagram of a container according to an embodiment of the present invention;
FIG. 2 is a schematic diagram of an end surface of a container according to an embodiment of the present invention;
FIG. 3 is a schematic diagram of a mounting frame according to an embodiment of the present invention;
FIG. 4 is a schematic diagram of a container with an electrolytic cell mounted according to an embodiment of the present invention;
FIG. 5 is a schematic block diagram of a mounting frame with an electrolytic cell mounted according to an embodiment of the present invention;
FIG. 6 is a schematic diagram of a first support member according to an embodiment of the present invention;
FIG. 7 is a schematic diagram of a second support member according to an embodiment of the present invention;
FIG. 8 is a schematic diagram of an interior of a container according to an embodiment of the present invention;
FIG. 9 is a schematic diagram of a first container body of a container according to an embodiment of the present invention;
FIG. 10 is a schematic diagram of an exterior of a container according to an embodiment of the present invention;
FIG. 11 is a schematic diagram of a reversing device according to an embodiment of the present invention;
FIG. 12 is a front view of a reversing device according to an embodiment of the present invention;
FIG. 13 is a schematic diagram of a reversing device in an interior circulation state according to an embodiment of the present invention; and
FIG. 14 is a schematic diagram of a reversing device in an exterior circulation state according to an embodiment of the present invention.

Descriptions of reference numerals:
1-Container, 101-First container body, 102-Second container body, 103-Escalator, 11-Bottom base, 121-First cover plate, 122-Second cover plate, 131-First side plate, 132-Second side plate, 141-First driving mechanism, 142-Second driving mechanism, 151-First fixing rod, 152-Second fixing rod, 161-First connecting rod, 162-Second connecting rod, 20-Mounting frame, 21-Vertical column, 22-Cross beam, 23-Reinforcing beam, 30-Container, 31-Electrolytic cell, 311-First support member, 312-Second support member, 313-Ball, 32-End plate, 33-Gas-liquid separator, 34-Scrubber, 35-Alkaline liquor cooler, 36-Alkaline liquor circulating pump, 37-Rectifier cabinet, 38-Control cabinet, 40-Air circulation device, 401-Ventilation pipeline, 402-Reversing device, 41-First air opening, 42-Second air opening, 43-Third air opening, 44-Fourth air opening, 45-Housing, 46-Reversing plate, 47-Heating device, and 48-Fan.

### DETAILED DESCRIPTION

The following clearly and completely describes the technical solutions in the embodiments of the present invention with reference to the accompanying drawings in the embodiments of the present invention. Apparently, the described embodiments are some of the embodiments of the present invention rather than all of the embodiments. All other embodiments obtained by a person of ordinary skill in the art based on the embodiments of the present invention without creative efforts shall fall within the protection scope of the present invention.

The terms such as "first" and "second" in this specification and the claims of the present invention are intended to distinguish between similar objects rather than describe a specific order or sequence. It should be understood that the data used in such a way are interchangeable in proper circumstances, so that the embodiments of the present invention described herein can be implemented in an order different from the order illustrated or described herein. In addition, the objects distinguished by the "first" and "second" generally belong to the same type, and a quantity of the objects is not limited. For example, there may be one or more first objects. In addition, in this specification and the claims "and/or" generally indicates at least one of connected objects, and the character "/" generally indicates an "or" relationship between associated objects.

It should be understood that "one embodiment" mentioned throughout this specification means that specific features, structures, or characteristics related to the embodiment are included in at least one embodiment of the present invention. Therefore, "in an embodiment" appearing throughout this specification does not necessarily refer to a same embodiment. In addition, these specific features, structures, or characteristics may be combined in one or more embodiments in any suitable manner.

The following describes a container and a hydrogen production system provided in the present invention in detail by listing specific embodiments.

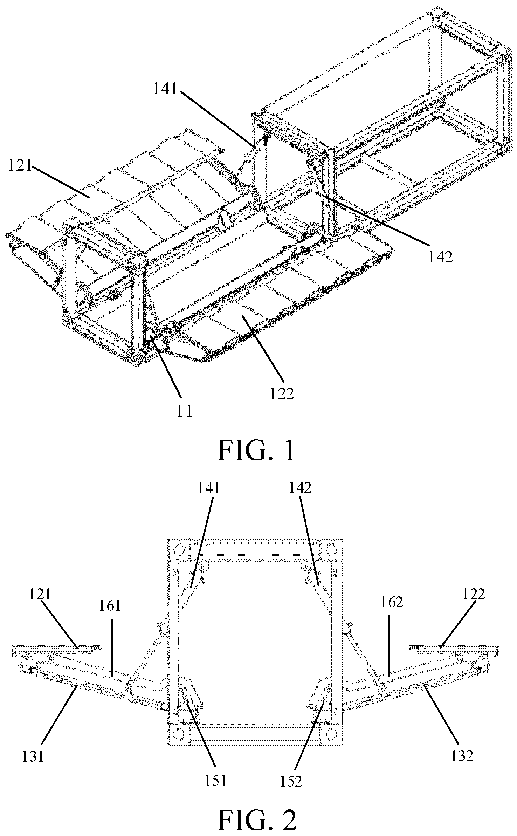

Referring to FIG. 1 and FIG. 2, the present invention discloses a container, including a bottom base 11, an upper cover, a first side plate 131, and a driving device, where the first side plate 131 is arranged between the bottom base 11 and the upper cover, and is connected to the bottom base 11 and the upper cover separately; and the driving device is connected to the first side plate 131 and is configured to drive the first side plate 131 to rotate relative to the bottom base 11, and the first side plate 131 drives the upper cover to move, to switch the container from a closed state to an open state.

Specifically, the container is formed by the bottom base 11, the upper cover, and side plates through enclosure. The bottom base 11 is opposite to the upper cover, and the side plates are located between the bottom base 11 and the upper cover. Because the container is generally of a rectangular container body structure, there are four side plates between the bottom base 11 and the upper cover. The four side plates are respectively connected to the bottom base 11 and the upper cover to be enclosed to form a closed container. The four side plates include the first side plate 131. The first side plate 131 is connected to the driving device, and the driving device can drive the first side plate 131 to rotate relative to the bottom base 11. Because the first side plate 131 is connected to the upper cover, the first side plate 131 drives the upper cover to rotate synchronously during rotation, and the upper cover rotates to a side portion of the bottom base 11 along with the first side plate 131, so that the container is switched from the closed state to the open state. When the container is in the open state, a hydrogen production device can be hoisted into the container from a top portion of the container, especially for an electrolytic cell 31 with a relatively large volume and a relatively heavy weight, so that the hydrogen production device can be directly placed in the container in a hoisting manner, thereby greatly simplifying a process of placing the hydrogen production device in the container, and improving the design efficiency of the hydrogen production system. Further, a relatively large angle range by which the first side plate 131 can be rotated relative to the bottom base 11 may be set, when the container is in the open state, the first side plate 131 drives the upper cover to rotate to be flush with the bottom base 11, and even drives the upper cover to a position abutting against ground, so that personnel can directly enter the container along the upper cover to perform overhaul and maintenance on the hydrogen production device in the container, thereby effectively resolving the problem of inconvenient maintenance on the hydrogen production device after the hydrogen production device is placed in the container.

In the container of this embodiment, the upper cover is driven by the first side plate 131 to move, so that the container can be switched from the closed state to the open state, thereby implementing hoisting of a device, greatly simplifying a process of placing the device in the container, and improving the design efficiency of the hydrogen production system. In addition, when the container is in the open state, personnel can directly enter the container along the upper cover to perform overhaul and maintenance on the device in the container, thereby effectively resolving the problem of inconvenient maintenance on the device after the device is placed in the container.

Optionally, referring to FIG. 1 and FIG. 2, the container further includes a second side plate 132, and the upper cover includes a first cover plate 121 and a second cover plate 122; the second side plate 132 is arranged opposite to the first side plate 131, and is connected to the bottom base 11 and the upper cover separately; and the driving device is connected to the second side plate 132 and is configured to drive the second side plate 132 to rotate relative to the bottom base 11, and the second side plate 132 drives the upper cover to move, to switch the container from the closed state to the open state, where the first side plate 131 is connected to the first cover plate 121 to drive the first cover plate 121 to move, and the second side plate 132 is connected to the second cover plate 122 to drive the second cover plate 122 to move.

Specifically, the four side plates in the container further include the second side plate 132, and the second side plate 132 is a side plate opposite to the first side plate 131. In addition, the upper cover of the container is formed by the first cover plate 121 and the second cover plate 122. The first cover plate 121 and the second cover plate 122 have the same size. The first cover plate 121 is connected to the first side plate 131, and the second cover plate 122 is connected to the second side plate 132. In addition to being connected to the first side plate 131, the driving device is further connected to the second side plate 132 and can drive the second side plate 132 to rotate relative to the bottom base 11. Therefore, in a process that the driving device drives the first side plate 131 and the second side plate 132 to rotate, the first side plate 131 drives the first cover plate 121 to rotate synchronously, and the second side plate 132 drives the second cover plate 122 to rotate synchronously, so that the container is opened from two sides, and open space of the container is further expanded, which is more convenient to hoist the hydrogen production device, and provides more spacious space for personnel to perform overhaul and maintenance on the device.

Optionally, referring to FIG. 1 and FIG. 2, the driving device includes a first driving mechanism 141 and a second driving mechanism 142; and the first driving mechanism 141 is connected to the first side plate 131, and the second driving mechanism 142 is connected to the second side plate 132.

Specifically, the driving device includes the first driving mechanism 141 and the second driving mechanism 142. The first driving mechanism 141 is connected to the first side plate 131 to drive the first side plate 131 to rotate relative to the bottom base 11. The second driving mechanism 142 is connected to the second side plate 132 to drive the second side plate 132 to rotate relative to the bottom base 11. The first side plate 131 and the second side plate 132 are controlled by independent driving mechanisms, so that the container may be selected to be opened on one side or on both sides as required. When the hydrogen production device has a large volume, it may be preferred to open both sides of the container, and when space in which the container is located is limited, it may be preferred to open one side of the container. This is not limited in this embodiment.

Optionally, seal gaskets are arranged on opposite surfaces of the first cover plate 121 and the second cover plate 122.

Specifically, the seal gaskets are arranged on the opposite surfaces of the first cover plate 121 and the second cover plate 122. When the container is in the closed state, the seal gasket on the first cover plate 121 fully abuts against the seal gasket on the second cover plate 122, to ensure the sealing performance of the upper cover. Due to the light mass of hydrogen, in a hydrogen production process of the hydrogen production device in the container, the upper cover effectively seals the container, thereby preventing the hydrogen from leaking from the upper cover and threatening the surrounding environment.

Optionally, the first side plate 131 is hingedly connected to the first cover plate 121, and the second side plate 132 is hingedly connected to the second cover plate 122.

Specifically, the first side plate 131 is hingedly connected to the first cover plate 121, and in a process that the first side plate 131 drives the first cover plate 121 to rotate, the first cover plate 121 can still rotate relative to the first side plate 131. Similarly, the second side plate 132 is hingedly connected to the second cover plate 122, and in a process that the second side plate 132 drives the second cover plate 122 to rotate, the second cover plate 122 can still rotate relative to the second side plate 132. Rotation of the first cover plate 121 and the second cover plate 122 may be performed under the action of gravity, or may be manually adjusted, or may be automatically adjusted through a mechanical device. This is not limited in this embodiment.

Optionally, referring to FIG. 2, the container further includes a first linkage mechanism and a second linkage mechanism; the first linkage mechanism includes the first side plate 131 and the first cover plate 121, and the second linkage mechanism includes the second side plate 132 and the second cover plate 122; and during rotation of the first side plate 131 and the second side plate 132, the first cover plate 121 and the second cover plate 122 are in a horizontal state.

Specifically, the container further includes the first linkage mechanism and the second linkage mechanism. The first linkage mechanism is formed by connection of the first side plate 131 and the first cover plate 121 through rotation, and the second linkage mechanism is formed by connection of the second side plate 132 and the second cover plate 122 through rotation. In a process that the driving device drives the first side plate 131 and the second side plate 132 to rotate relative to the bottom base 11, the linkage mechanism can enable the first cover plate 121 and the second cover plate 122 to be in the horizontal state, that is, the first cover plate 121 and the second cover plate 122 maintain horizontal movement, so that maintenance personnel can stand on the first cover plate 121 and the second cover plate 122 to perform overhaul on the hydrogen production device in the container, or can place maintenance tools on the first cover plate 121 and the second cover plate 122, and the maintenance tools do not fall in this case. Therefore, through arrangement of the first linkage mechanism and the second linkage mechanism, in a process that the container is opened, personnel can also be allowed to stand on the first cover plate 121 and the second cover plate 122, to perform overhaul and maintenance on the device, thereby greatly improving the working efficiency.

Optionally, referring to FIG. 2, the first linkage mechanism further includes a first fixing rod 151 and a first connecting rod 161, and the second linkage mechanism further includes a second fixing rod 152 and a second connecting rod 162; the first side plate 131, the first fixing rod 151, the first connecting rod 161, and the first cover plate 121 are hingedly connected to each other sequentially, where the first fixing rod 151 is fixedly connected to the bottom base 11; and the second side plate 132, the second fixing rod 152, the second connecting rod 162, and the second cover plate 122 are hingedly connected to each other sequentially, where the second fixing rod 152 is fixedly connected to the bottom base 11.

Specifically, the first linkage mechanism further includes the first fixing rod 151 and the first connecting rod 161, and the first side plate 131, the first fixing rod 151, the first connecting rod 161, and the first cover plate 121 are hingedly connected to each other sequentially to form a planar four-bar linkage structure, where the first fixing rod 151 is fixedly connected to the bottom base 11. During movement of the first linkage mechanism, the fixing rod 151 and the first cover plate 121 remain parallel, and the first side plate 131 and the first connecting rod 161 remain parallel. Similarly, the second linkage mechanism further includes the second fixing rod 152 and the second connecting rod 162, and the second side plate 132, the second fixing rod 152, the second connecting rod 162, and the second cover plate 122 are hingedly connected to each other sequentially to form a planar four-bar linkage structure, where the second fixing rod 152 is fixedly connected to the bottom base 11. During movement of the second linkage mechanism, the second fixing rod 152 and the second cover plate 122 remain parallel, and the second side plate 132 and the second connecting rod 162 remain parallel. The planar four-bar linkage mechanisms are constrained from each other, and are stable and reliable during movement of the mechanisms, thereby achieving a strong bearing capability.

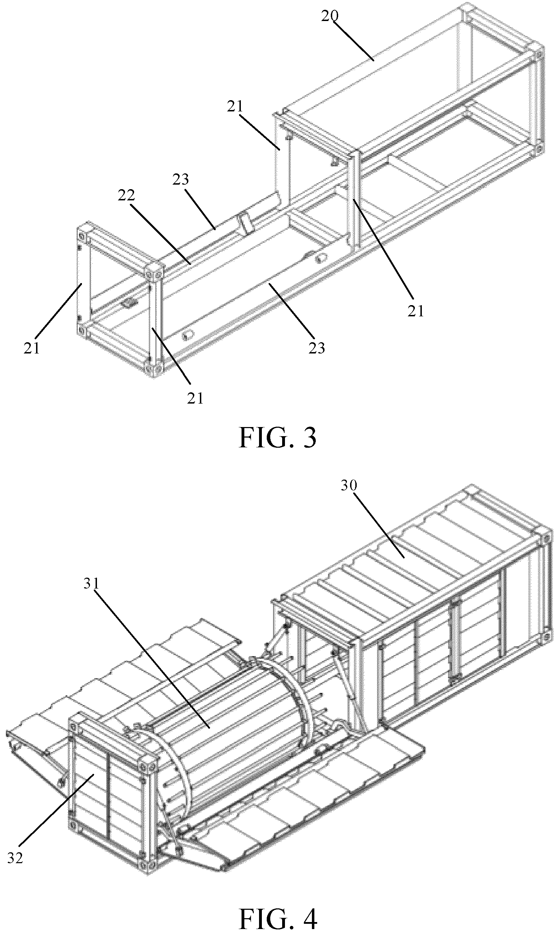

Optionally, referring to FIG. 1 and FIG. 3, the container further includes a mounting frame 20, and the bottom base 11, the upper cover, the first side plate 131, the second side plate 132, and the driving device are all mounted on the mounting frame 20; the driving device is a hydraulic cylinder including a cylinder sleeve and a piston rod arranged in the cylinder sleeve; and the cylinder sleeve is fixedly connected to the mounting frame 20, and the piston rod is fixedly connected to the first side plate 131 and the second side plate 132 separately.

Specifically, the container further includes the mounting frame 20; the bottom base 11, the upper cover, the first side plate 131, the second side plate 132, and the driving device are all mounted on the mounting frame 20; the driving device is a hydraulic cylinder including a cylinder sleeve and a piston rod arranged in the cylinder sleeve; and the cylinder sleeve is fixedly connected to an upper portion of the mounting frame 20, and the piston rod is fixedly connected to the first side plate 131 or the second side plate 132 separately. Specifically, there are two hydraulic cylinders respectively corresponding to the first driving mechanism 141 and the second driving mechanism 142, cylinder sleeves of the two hydraulic cylinders are both fixedly connected to the upper portion of the mounting frame 20, the piston rod of one of the hydraulic cylinders is fixedly connected to the first side plate 131, the piston rod of the other of the hydraulic cylinders is fixedly connected to the second side plate 132, and the two piston rods telescope along the cylinder sleeves to drive the first side plate 131 and the second side plate 132 to rotate relative to the bottom base 11. In this embodiment, connection between the hydraulic cylinders and the mounting frame 20 is reliable, thereby ensuring that the first side plate 131 and the second side plate 132 rotate stably relative to the bottom base 11.

Optionally, referring to FIG. 3, the mounting frame 20 includes four vertical columns 21 and two cross beams 22; every two of the four vertical columns 21 are arranged opposite to each other, and the two cross beams 22 are arranged between the opposite vertical columns 21 and are fixedly connected to the vertical columns 21; and the two cross beams 22 are parallel to each other and are located at a bottom portion of the mounting frame 20.

Specifically, the mounting frame 20 includes the four vertical columns 21 and the two cross beams 22. The four vertical columns 21 are arranged opposite to each other in pairs to form two planes parallel to each other. The two cross beams 22 are arranged between the opposite vertical columns 21 and are fixedly connected to the vertical columns 21. The two cross beams 22 are parallel to each other and are located at the bottom portion of the mounting frame 20 to form a rectangular frame at the bottom portion of the mounting frame 20. The upper portion of the mounting frame 20 is not provided with the cross beam 22 and is in a fully open state, after the hydrogen production device is placed in the mounting frame 20, a top portion of the hydrogen production device is not blocked by the cross beam 22, and the mounting frame 20 does not interfere or collide with the device during hoisting of the device, thereby facilitating hoisting of the device.

Optionally, referring to FIG. 3, the mounting frame 20 further includes a reinforcing beam 23, and the reinforcing beam 23 is arranged between the opposite vertical columns 21 and is fixedly connected to the vertical columns 21; and the reinforcing beam 23 is parallel to the cross beams 22 and is located at the bottom portion of the mounting frame 20.

Specifically, because the top portion of the mounting frame 20 is in the fully open state, fixing to the cross beams 22 is canceled. To ensure the reliability of an overall structure of the mounting frame 20, the reinforcing beam 23 is arranged between the opposite vertical columns 21 of the mounting frame 20. The reinforcing beam 23 is fixedly connected to the vertical columns 21, and is parallel to the cross beams 22. The reinforcing beam 23 is also located at the bottom portion of the mounting frame 20, which enhances the structural rigidity of the mounting frame 20 and does not interfere with hoisting of the device.

Referring to FIG. 4, the present invention further discloses a hydrogen production system, including a hydrogen production device and the container 1 according to any one of the foregoing embodiments, where the hydrogen production device is placed in the container 1; and the hydrogen production device includes an electrolytic cell 31, and the electrolytic cell 31 is configured to produce hydrogen.

Specifically, the hydrogen production system includes the hydrogen production device and the foregoing container 1. The hydrogen production device is placed in the container 1. The hydrogen production device includes the electrolytic cell 31. The electrolytic cell 31 includes a tank body, an anode, and a cathode. The anode and the cathode are usually separated by using a diaphragm. When a direct current flows through the electrolytic cell 31, alkaline electrolyte at the anode undergoes an oxidation reaction, and alkaline electrolyte at the cathode undergoes a reduction reaction, thereby producing hydrogen gas through an oxidation-reduction reaction. The driving device may first drive the first side plate 131 to rotate to cause the container 1 to be in the open state. After the container 1 is opened, the electrolytic cell 31 may be placed in the container 1 in a hoisting manner. Then, the driving device drives the first side plate 131 to rotate to cause the container 1 to be in the closed state. After the container 1 is closed, the hydrogen production system can start to work, and the electrolytic cell 31 produces hydrogen by electrolyzing alkaline electrolyte. Certainly, another hydrogen production device further needs to be placed in the container 1 to cooperate with the electrolytic cell 31, to implement hydrogen purification, drying, collection, and the like.

Optionally, referring to FIG. 4, the container 1 further includes a mounting frame 20 and an end plate 32; and the end plate 32 is arranged at an end portion at which the electrolytic cell 31 is located, and the end plate 32 is movably connected to the mounting frame 20.

Specifically, the container 1 further includes the mounting frame 20 and the end plate 32. The end plate 32 is arranged at the end portion at which the electrolytic cell 31 is located, and the end plate 32 is movably connected to the mounting frame 20. The container 1 may also be switched from the closed state to the open state by opening and closing the end plate 32. This is equivalent to that the end portion of the container 1 can be further opened while the top portion of the container is opened, which is more convenient for overhaul and maintenance on the device in the container 1.

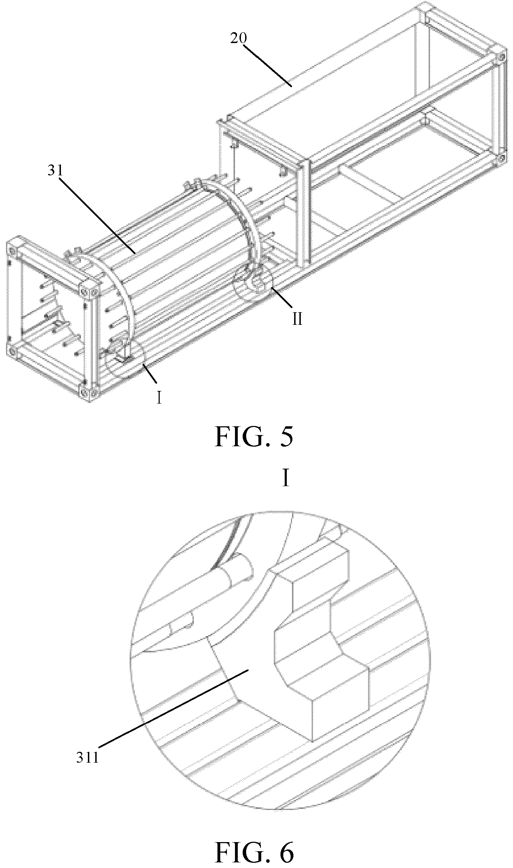

Optionally, referring to FIG. 5 to FIG. 7, the hydrogen production system further includes a first support member 311 and a second support member 312; the first support member 311 and the second support member 312 are arranged opposite to each other at two ends of the electrolytic cell 31 and are configured to support the electrolytic cell 31; and the first support member 311 is fixedly connected to the mounting frame 20, and the second support member 312 is movably connected to the mounting frame 20.

Specifically, because the electrolytic cell 31 is generally of a cylindrical structure and may shake in the container 1, the first support member 311 and the second support member 312 are further arranged in the container 1 to support the electrolytic cell 31. The first support member 311 and the second support member 312 are located at a bottom portion of the electrolytic cell 31 and are arranged opposite to each other at two ends of the electrolytic cell 31. The first support member 311 is fixedly connected to the mounting frame 20, and the second support member 312 is movably connected to the mounting frame 20. The electrolytic cell 31 is thermally expanded during hydrogen production, resulting in an increase in an axial size. The movable connection between the second support member 312 and the mounting frame 20 can allow the size change of the electrolytic cell 31, thereby preventing the electrolytic cell 31 from being squeezed and causing damage to the electrolytic cell 31.

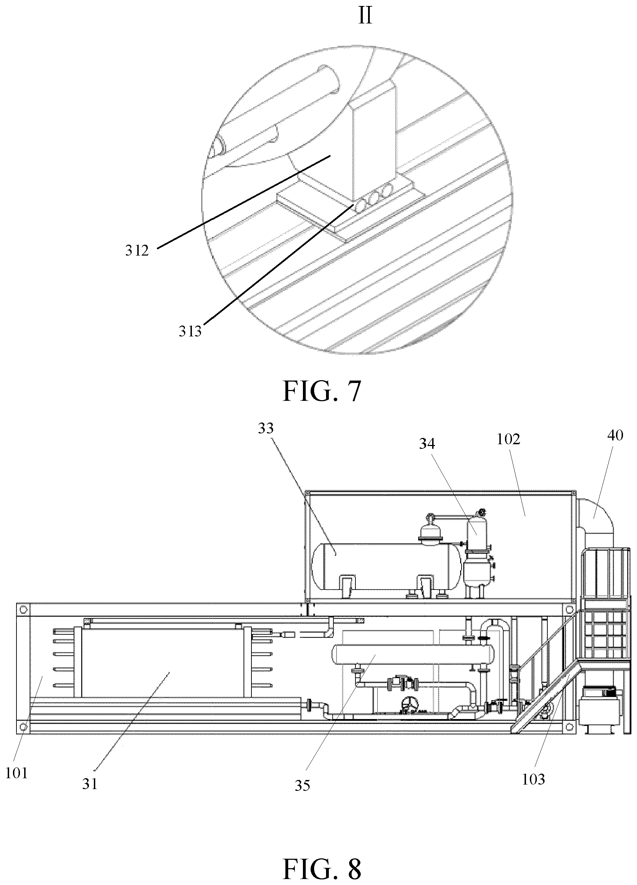

Optionally, referring to FIG. 7, the second support member 312 is slidably connected to the mounting frame 20.

Specifically, the second support member 312 is slidably connected to the mounting frame 20. In an implementation, a sliding groove may be provided on the mounting frame 20, and the second support member 312 is embedded in the sliding groove, so that when the electrolytic cell 31 is expanded and the axial size is increased, the second support member 312 is pushed to slide along the sliding groove. In another implementation, as shown in FIG. 7, a ball 313 may be arranged between the second support member 312 and the mounting frame 20. When the electrolytic cell 31 is expanded and the axial size is increased, the second support member 312 drives the ball 313 to roll along the mounting frame 20, to implement movement of the second support member 312 relative to the mounting frame 20. The foregoing two implementations have simple structures and facilitate assembly, and a technician may freely set a connection manner between the second support member 312 and the mounting frame 20 according to an actual requirement. This is not limited in this embodiment.

Optionally, an insulating layer is arranged on a surface of the first support member 311 abutting against the electrolytic cell 31 and a surface of the second support member 312 abutting against the electrolytic cell 31, or an insulating plate is arranged between the electrolytic cell 31 and each of the first support member 311 and the second support member 312.

Specifically, an insulating layer made of any material such as rubber, resin, or foam is arranged on the surface of the first support member 311 abutting against the electrolytic cell 31 and the surface of the second support member 312 abutting against the electrolytic cell 31, or an insulating plate, such as a wood board or a plastic board, is arranged between the electrolytic cell 31 and each of the first support member 311 and the second support member 312, to insulate the first support member 311 and the second support member 312 from the electrolytic cell 31, thereby preventing a current from being transmitted to an interior of the container 1 when the electrolytic cell 31 has the problem of current leakage, thereby improving the safety of the hydrogen production system.

Optionally, referring to FIG. 8, the container 1 includes at least two layers of container bodies, the hydrogen production device further includes a gas-liquid separator 33, and the gas-liquid separator 33 is configured for gas-liquid separation; and the electrolytic cell 31 and the gas-liquid separator 33 are arranged in container bodies at different layers.

Specifically, the container 1 includes at least two layers of container bodies, that is, a bottom-layer container body and a top-layer container body. The bottom-layer box includes a first accommodating portion and a second accommodating portion, where the first accommodating portion and the second accommodating portion are in communication with each other, and do not affect operation of the hydrogen production device. A size of the bottom-layer container body is greater than a size of the top-layer container body, and a projection of the top-layer container body along a vertical direction is located in the second accommodating portion. The hydrogen production system further includes other hydrogen production devices such as the gas-liquid separator 33. The gas-liquid separator 33 can remove, by using a technology such as a separation baffle plate, alkaline electrolyte carried in gas from the electrolytic cell 31, to implement gas-liquid separation. Since both hydrogen and oxygen are produced during hydrogen production of the electrolytic cell 31, the gas-liquid separator 33 further includes a hydrogen gas-liquid separator and an oxygen gas-liquid separator. The hydrogen gas-liquid separator can remove alkaline electrolyte carried in the hydrogen, and the oxygen gas-liquid separator can remove alkaline electrolyte carried in the oxygen, thereby recycling and reusing the alkaline electrolyte. The electrolytic cell 31 and the gas-liquid separator 33 are arranged in container bodies at different layers, the electrolytic cell 31 is located in the bottom-layer container body, and the gas-liquid separator 33 is located in the top-layer container body. Through this arrangement, the space utilization of the container 1 in a vertical direction is improved, and space occupied by the container 1 in a horizontal direction is reduced, so that an occupied area of the container 1 can be effectively reduced, which is conducive to planning and construction of a factory. **In** addition, the electrolytic cell 31 is arranged in the bottom-layer container body, and the gas-liquid separator 33 is arranged in the top-layer container body, so that gas-liquid separation can be performed on gas produced by the electrolytic cell 31 by using a gravity principle, thereby improving the efficiency of gas treatment.

Referring to FIG. 8, the container includes a first container body 101 and a second container body 102, the first container body 101 and the second container body 102 are stacked, and the first container body 101 is located at a bottom layer; and the electrolytic cell 31 is arranged in the first container body 101, and the gas-liquid separator 33 is arranged in the second container body 102.

Specifically, the container includes the first container body 101 and the second container body 102, and the first container body 101 and the second container body 102 are stacked, where the first container body 101 is located at the bottom layer, the second container body 102 is located at an upper layer, the electrolytic cell 31 is arranged in the first container body 101 at the bottom layer, and the gas-liquid separator 33 is arranged in the second container body 102 at the upper layer, so that a liquid level difference exists between the electrolytic cell 31 and the gas-liquid separator 33, which is conducive to separation between gas and the alkaline electrolyte. **In** addition, because hydrogen has relatively light mass, the hydrogen flows upward during separation from the alkaline electrolyte, and the gas-liquid separator 33 located at the upper layer is more conducive to gas-liquid separation, thereby improving the efficiency of gas-liquid separation. In addition, the electrolytic cell 31 and the gas-liquid separator 33 are respectively arranged in the two container bodies at the upper layer and the bottom layer of the container, so that the space utilization of the container in a height direction can be improved, and space occupied by the hydrogen production device in a horizontal direction of the container can be reduced to some extent, thereby saving an occupied area of the hydrogen production system, and facilitating planning and construction of the hydrogen production system.

Optionally, referring to FIG. 8, the hydrogen production device further includes a scrubber 34, the scrubber 34 is arranged in the second container body 102 and is connected to the gas-liquid separator 33, and the scrubber 34 is configured to scrub gas from the gas-liquid separator 33.

Specifically, the scrubber 34 may further remove, by using scrubbing liquid such as water or a weak alkaline aqueous solution, alkaline mist carried in the hydrogen or the oxygen from the gas-liquid separator 33, so that the hydrogen or the oxygen is further purified. The scrubber 34 is arranged in the second container body 102 and is connected to the gas-liquid separator 33. After the gas-liquid separator 33 separates the alkaline electrolyte fromthe gas, the scrubber 34 purifies the gas separated by the gas-liquid separator 33, to improve the purity and quality of the gas. Correspondingly, the scrubber 34 may further include a hydrogen scrubber and an oxygen scrubber. The hydrogen scrubber is connected to the hydrogen gas-liquid separator to scrub the hydrogen, and the oxygen scrubber is connected to the oxygen gas-liquid separator to scrub the oxygen. As required, the scrubber 34 may alternatively include only a hydrogen scrubber and the oxygen from the oxygen gas-liquid separator is emptied. The scrubber 34 may be further connected to a gas cooler and a gas-water separator sequentially, to further remove water from the gas. According to a space size of the second container body 102, the scrubber 34 is preferably an integrated scrubber, which integrates functions of a scrubber, a gas cooler, and a gas-water separator, specifically functions of scrubbing, cooling, and demisting, and occupies a smaller area and has a lower total height.

Optionally, referring to FIG. 8, the hydrogen production system further includes an escalator 103, and the escalator 103 extends to an end portion of the second container body 102; and an access door is arranged at a position on the end portion of the second container body 102 close to the escalator 103.

Specifically, the escalator 103 extends to the end portion of the second container body 102, so that personnel can reach the second container body 102 through the escalator 103. The access door is arranged at the position on the end portion of the second container body 102 close to the escalator 103, so that after reaching the second container body 102, the personnel can directly enter the second container body 102 through the access door to perform overhaul on the hydrogen production device such as the gas-liquid separator 33 and the scrubber 34 in the second container body 102, thereby greatly facilitating maintenance on the hydrogen production device in the second container body 102.

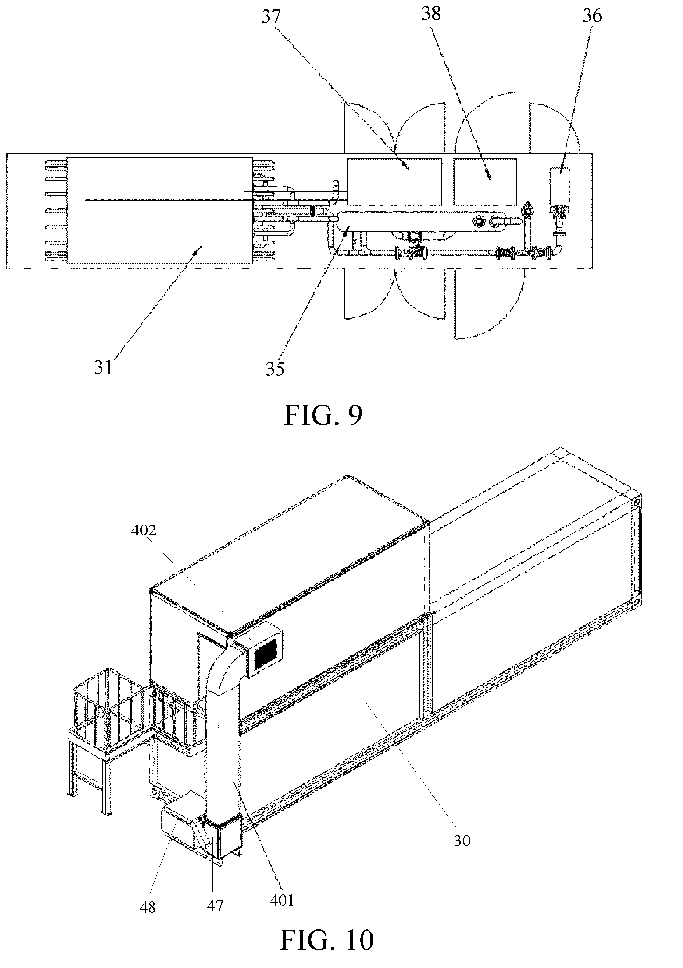

Optionally, referring to FIG. 8 and FIG. 9, the hydrogen production device further includes an alkaline liquor cooler 35 and an alkaline liquor circulating pump 36; and the alkaline liquor cooler 35 and the alkaline liquor circulating pump 36 are arranged in the first container body 101 and in communication with the electrolytic cell 31.

Specifically, the alkaline liquor cooler 35 is connected to the gas-liquid separator 33, and alkaline liquor collected by the gas-liquid separator 33 enters the alkaline liquor cooler 35 and is cooled to a suitable temperature, preferably to 70°C to 100°C. The alkaline liquor circulating pump 36 is further arranged in the first container body 101, where one end of the alkaline liquor circulating pump 36 is in communication with the electrolytic cell 31, and the other end of the alkaline liquor circulating pump is in communication with the alkaline liquor cooler 35, to pump the alkaline liquor cooled to the suitable temperature into the electrolytic cell 31.

Optionally, referring to FIG. 9, the electrolytic cell 31, the alkaline liquor cooler 35, and the alkaline liquor circulating pump 36 are horizontally arranged in the first container body 101 sequentially.

Specifically, the electrolytic cell 31, the alkaline liquor cooler 35, and the alkaline liquor circulating pump 36 are horizontally arranged in the first container body 101 sequentially, and the electrolytic cell 31 is located at an end portion of the first container body 101, which facilitates overhaul and maintenance on the electrolytic cell 31. The alkaline liquor cooler 35 is located between the electrolytic cell 31 and the alkaline liquor circulating pump 36, and is relatively close to the gas-liquid separator 33, to conveniently receive the electrolyte collected by the gas-liquid separator 33. A circulation effect of the circulating pump on the alkaline electrolyte in the electrolytic cell 31 is less affected by a distance, and therefore, the circulating pump is arranged at the other end portion of the first container body 101, to ensure that each hydrogen production device in the first container body 101 can perform its own function to the maximum extent, thereby improving the safety and reliability during hydrogen production.

Optionally, referring to FIG. 9, the hydrogen production device further includes a control device, and the control device is arranged between the alkaline liquor cooler 35 and a side wall of the first container body 101.

Specifically, the alkaline liquor cooler 35 may be horizontally placed in the first container body 101, so that the control device is arranged between the alkaline liquor cooler 35 and the side wall of the first container body 101. The control device includes a rectifier cabinet 37, a control cabinet 38, and the like. The rectifier cabinet 37 adopts an in-phase inverse parallel three-phase bridge type rectifier circuit, and can convert an alternating current into a direct current. A voltage of 600 V to 700 V is usually inputted to the hydrogen production device for normal operation of the hydrogen production device. The control cabinet 38 is equivalent to a control center of the hydrogen production system, and controls normal operation of the hydrogen production device through various circuit structures. The control device is located between the alkaline liquor cooler 35 and the side wall of the first container body 101, and is relatively close to the electrolytic cell 31, so that a power supply circuit path between the control device and the electrolytic cell 31 can be effectively reduced, thereby reducing a circuit electric energy loss and avoiding a waste of electric resources.

Optionally, the first container body 101 includes a first accommodating portion and a second accommodating portion; the electrolytic cell 31 is arranged in the first accommodating portion, and the alkaline liquor cooler 35 and the alkaline liquor circulating pump 36 are both arranged in the second accommodating portion; and an access door is arranged on a side of the first accommodating portion close to the second container body 102, and an access door is arranged on a side wall of the second accommodating portion.

Specifically, the first container body 101 includes the first accommodating portion and the second accommodating portion, where the first accommodating portion and the second accommodating portion are in communication with each other, and do not affect operation of the hydrogen production device. The electrolytic cell 31 is arranged in the first accommodating portion, and the alkaline liquor cooler 35 and the alkaline liquor circulating pump 36 are both arranged in the second accommodating portion. An access door is arranged on the side of the first accommodating portion close to the second container body 102, which is equivalent to that an access door is arranged above the electrolytic cell 31. The arrangement of the access door may allow the electrolytic cell 31 to be hoisted. For some large-scale electrolytic cells 31, the electrolytic cells may be directly mounted in the first container body 101 in a hoisting manner, thereby simplifying a mounting manner of the electrolytic cell 31. An access door is arranged on the side wall of the second accommodating portion. There may be one or more access doors. When there is one access door, after entering the first container body 101, maintenance personnel can autonomously move to a device requiring maintenance. When there are a plurality of access doors, access doors may be provided at parts close to the alkaline liquor cooler 35 and the alkaline liquor circulating pump 36, and the maintenance personnel do not need to move a long distance in the first container body 101, which is more convenient for device maintenance.

Optionally, referring to FIG. 8, a projection of the second container body 102 along a vertical direction is located in the second accommodating portion.

Specifically, a size of the first container body 101 is greater than a size of the second container body 102. Along the vertical direction, the projection of the second container body 102 is located in the second accommodating portion, and an end portion of the second container body 102 may be flush with the first container body 101, so that an overall structure of the container is more proper. In addition, sufficient maintenance space can be reserved above the electrolytic cell 31, and hydrogen produced by the electrolytic cell 31 can easily enter the gas-liquid separator 33 smoothly.

Optionally, the second accommodating portion is in communication with an interior of the second container body 102.

Specifically, the second accommodating portion is in communication with the interior of the second container body 102, so that the air in the first container body 101 and the second container body 102 is in a circulating state, thereby avoiding an excessively high local temperature of the container bodies and improving the safety during hydrogen production.

Optionally, a size of the first container body 101 along a horizontal direction ranges from 12 m to 13 m, and a size of the first container body 101 along a vertical direction ranges from 2 m to 3 m.

Specifically, along the horizontal direction, the size of the first container body 101 ranges from 12 m to 13 m, and along the vertical direction, the size of the first container body 101 ranges from 2 m to 3 m. This is equivalent to that a length size of the first container body 101 approximately ranges from 12 m to 13 m and a height size of the first container body approximately ranges from 2 m to 3 m. A width size of the first container body 101 is approximately the same as the height size of the first container body, which also ranges from 2 m to 3 m. That is, the container in this embodiment is a large-scale container, and can produce approximately 1000 Nm³ of hydrogen per hour. A size of the second container body 102 along the horizontal direction is about half of that of the first container body 101, and an overall volume of the second container body is also about half of that of the first container body 101, which can satisfy placement of various hydrogen production devices to ensure normal operation of the hydrogen production system.

Optionally, referring to FIG. 8, the hydrogen production system further includes an air circulation device 40, and the air circulation device 40 is configured to communicate air in the container 1 with external air.

Specifically, because the hydrogen production system can be hardly quickly started in an environment with a low temperature such as an extreme cold environment, a temperature in the container needs to be increased, and a large amount of heat is also generated during normal hydrogen production after the system is started, resulting in an increase in the temperature in the container 1. An excessively high temperature is not conducive to operation of the hydrogen production device. In addition, when a hydrogen concentration in the container 1 is relatively high, the excessively high temperature even causes hydrogen explosion, which seriously threatens personnel safety. Therefore, the air circulation device 40 is arranged in the hydrogen production system, and may be arranged inside the container 1 or outside the container 1. The air circulation device 40 can circulate the air in the container 1 with the external air. In this way, the temperature inside the container 1 is reduced and the hydrogen concentration is reduced, thereby improving the operating safety of the hydrogen production system. It should be noted that, the air circulation device 40 in this embodiment may be a device integrated in the container 1, or may be a device independent of the container 1. That is, the air circulation device 40 is not a device existing under a specific structure of the container 1, and may be applied to operation in a plurality of scenarios in which air circulation is required. A specific operation scenario is not limited in this embodiment.

Optionally, referring to FIG. 10, the air circulation device 40 includes a ventilation pipeline 401 and a reversing device 402, where the reversing device 402 is arranged at an end portion of the ventilation pipeline 401, an air duct for air circulation is formed between the reversing device and the ventilation pipeline 401, and the air duct is configured to provide circulating ventilation for the container; the reversing device 402 is provided with a plurality of air openings, and the reversing device 402 switches between the different air openings to cause the air circulation device to be in an interior circulation state or an exterior circulation state; and in the interior circulation state, the air in the container is isolated from the external air, and in the exterior circulation state, the air in the container is in communication with the external air.

Specifically, an interior of the ventilation pipeline 401 is a hollow cavity. The reversing device 402 is arranged at an end portion of the ventilation pipeline 401, and is in communication with the ventilation pipeline 401. An air duct for air circulation is formed between the reversing device 402 and the ventilation pipeline 401. The air duct communicates the interior of the container 1 with an external atmospheric environment, so that circulating ventilation can be provided for the container 1. The reversing device 402 is provided with a plurality of air openings, the air enters or exits the reversing device 402 through the air openings, and the reversing device 402 switches between the different air openings to cause the air circulation device to be in the interior circulation state or the exterior circulation state.

In the interior circulation state, the air in the container 1 is isolated from the external air, that is, the air only circulates inside the closed container 1. Because the device generates a large amount of heat during hydrogen production, the temperature in the container 1 continuously increases. In the exterior circulation state, the air in the container 1 is in communication with the external air, and the heat in the container 1 is transmitted to the external air, thereby achieving temperature reduction in the container 1, avoiding hydrogen explosion caused by an excessively high temperature in the container 1, and improving the safety during hydrogen production. In some cold regions, the external air has an extremely low temperature, which is not conducive to startup of the hydrogen production device. In this case, the air circulation device may be set to the interior circulation state. After the device is started, the temperature in the container 1 continuously increases, to ensure normal startup of the hydrogen production device. After the hydrogen production device starts to operate, the air circulation device may be set to the exterior circulation state, and the air in the container 1 is in communication with the external air, to perform temperature reduction in the container 1 and reduce a hydrogen concentration, thereby ensuring normal operation of the hydrogen production device. Therefore, the temperature in the container 1 can be flexibly adjusted according to the temperature of the external environment, so that the container 1 is applicable to different regions, and use scenarios of the container 1 are expanded.

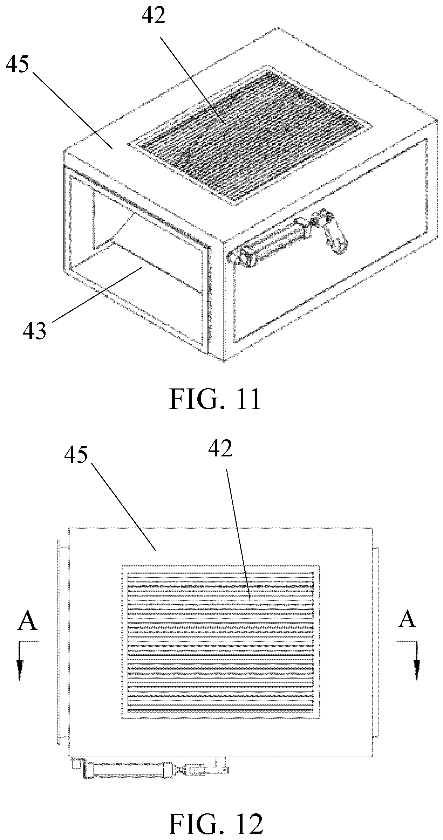

Optionally, referring to FIG. 11 to FIG. 14, the plurality of air openings include a first air opening 41, a second air opening 42, a third air opening 43, and a fourth air opening 44; the first air opening 41 and the second air opening 42 are opposite to each other, and the third air opening 43 and the fourth air opening 44 are opposite to each other; the first air opening 41 is configured to be in communication with the container 1, the third air opening 43 is configured to be in communication with the ventilation pipeline 401, and the second air opening 42 and the fourth air opening 44 are configured to be in communication with the external air; in the interior circulation state, the first air opening 41 is in communication with the third air opening 43, and the second air opening 42 is in communication with the fourth air opening 44; and in the exterior circulation state, the first air opening 41 is in communication with the fourth air opening 44, and the second air opening 42 is in communication with the third air opening 43.

Specifically, the plurality of air openings of the reversing device 402 include the first air opening 41, the second air opening 42, the third air opening 43, and the fourth air opening 44. The first air opening 41 is opposite to the second air opening 42, and the third air opening 43 is opposite to the fourth air opening 44. To facilitate air circulation, the reversing device 402 may be arranged in a rectangular structure. The first air opening 41 is in communication with the container 1, so that the air in the container 1 can flow into the reversing device 402 through the first air opening 41. The third air opening 43 is in communication with the ventilation pipeline 401, that is, the air duct for circulating ventilation for the container 1 is formed between the reversing device 402 and the ventilation pipeline 401 through the third air opening 43. The second air opening 42 and the fourth air opening 44 are adjacent to each other and in communication with the external air, and the reversing device 402 exchanges air with the external environment through the second air opening 42 and the fourth air opening 44.

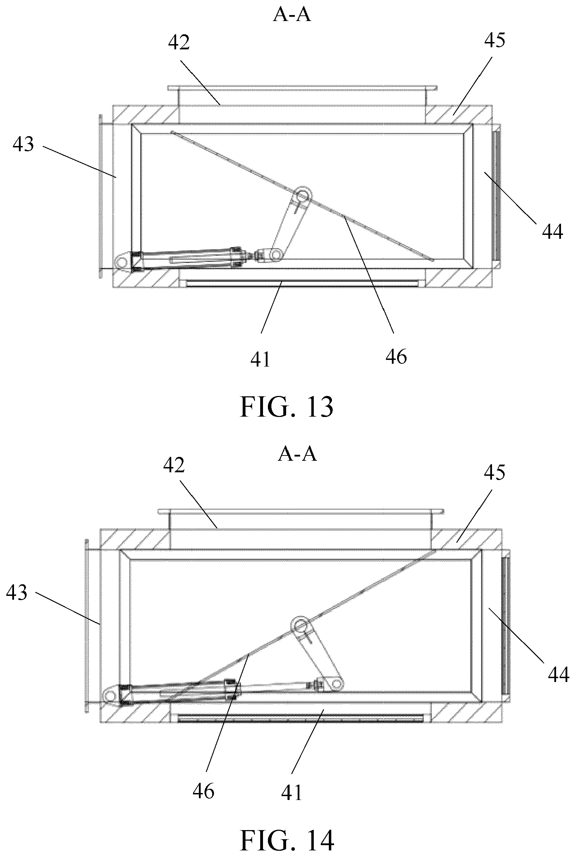

As shown in FIG. 13, when the air circulation device is in the interior circulation state, the first air opening 41 is in communication with the third air opening 43, and the second air opening 42 is in communication with the fourth air opening 44. A baffle may be arranged in the reversing device 402, to block the second air opening 42 and the fourth air opening 44 in the interior circulation state, so that the second air opening 42 and the fourth air opening 44 cannot circulate air, and the air only circulates from the first air opening 41 and the third air opening 43. Alternatively, the second air opening 42 and the fourth air opening 44 may be directly arranged as air openings that can be opened or closed, the second air opening 42 and the fourth air opening 44 are closed in the interior circulation state, and the air only circulates from the first air opening 41 and the third air opening 43. In this state, the air in the container 1 flows into the reversing device 402 through the first air opening 41, and then flows into the air duct of the ventilation pipeline 401 through the third air opening 43. Because the air duct of the ventilation pipeline 401 is also in communication with the interior of the container 1, the air flows into the interior of the container 1 from the air duct, thereby realizing circulation of the air in the container 1. Because hot air flows upward compared with cold air, the reversing device 402 may be arranged at an upper portion of the ventilation pipeline 401. After the hot air at the upper portion of the container 1 flows into the reversing device 402 through the first air opening 41, the hot air flows downward along the ventilation pipeline 401 through the third air opening 43, and finally flows into a lower portion of the container 1, thereby realizing circulation of the air in the container 1.

As shown in FIG. 14, when the air circulation device is in the exterior circulation state, the first air opening 41 is in communication with the fourth air opening 44, the second air opening 42 is in communication with the third air opening 43, and the four air openings all circulate air. However, air circulating between the first air opening 41 and the fourth air opening 44 is in a different path from air circulating between the second air opening 42 and the third air opening 43, and baffles may be arranged in the reversing device 402 to isolate the first air opening 41 and the fourth air opening 44 from the second air opening 42 and the third air opening 43, so that air in the two paths does not merge. In this state, the hot air at the upper portion of the container 1 flows into the reversing device 402 through the first air opening 41, and directly flows out through the fourth air opening 44 of the reversing device 402. To ensure the stability of air pressure in the container 1, the air in the external environment flows into the reversing device 402 through the second air opening 42, then flows into the air duct of the ventilation pipeline 401 through the third air opening 43, and flows into the lower portion of the container 1 through the ventilation pipeline 401, thereby realizing circulation of the air in the container 1 and the external air.

The air circulation device in this embodiment implements switching between the interior circulation state and the exterior circulation state through arrangement of the four air openings of the reversing device 402, thereby greatly facilitating the adjustment of the temperature in the container 1.

Optionally, the second air opening 42 and the third air opening 43 are each connected to a filter screen.

Specifically, the second air opening 42 and the third air opening 43 are both connected to a filter screen. The second air opening 42 is an air inlet of the external air, and the third air opening 43 is an air inlet of the air duct. Therefore, the second air opening 42 and the third air opening 43 are each connected to a filter screen to filter particulate impurities or dust in the air, thereby ensuring that clean air flows into the container 1, reducing a dust deposition degree of the hydrogen production device in the container 1, prolonging a service life of the hydrogen production device, and improving hydrogen production quality to some extent.

Optionally, referring to FIG. 10, the air circulation device further includes a heating device 47; and the heating device 47 is in communication with the ventilation pipeline 401, and in the interior circulation state, the heating device 47 heats air in the air duct.

Specifically, the air circulation device further includes the heating device 47. The heating device 47 is in communication with the ventilation pipeline 401. When the air circulation device is in the interior circulation state, the heating device 47 works to heat the air in the air duct, so that the air flowing into the container 1 through the air duct is hot air, thereby accelerating a temperature rise speed in the container 1, and enabling the temperature in the container 1 to quickly reach a temperature at which the hydrogen production device operates normally. It should be noted that, in the exterior circulation state, the heating device 47 is in a turn-off state and does not produce heat.

Optionally, referring to FIG. 10, the air circulation device further includes a fan 48; and the fan 48 is in communication with the ventilation pipeline 401, and the fan 48 is configured to draw air from the air openings.

Specifically, because wind in the air duct comes from the container 1 or the external environment, when the pressure in the container 1 is consistent with the external atmospheric pressure, a speed at which the air in the container 1 flows into the reversing device 402 is very slow. Therefore, the fan 48 is arranged to be in communication with the ventilation pipeline 401, and the fan 48 can draw air from the air openings of the reversing device 402 to accelerate the flow of the air, so as to cause the air in the container 1 to be continuously in a flowing state.

Optionally, referring to FIG. 10, the ventilation pipeline 401 is a vertical pipeline, and the heating device 47 and the fan 48 are both arranged on a side of the ventilation pipeline 401 close to ground.

Specifically, the ventilation pipeline 401 is a vertical pipeline, and the heating device 47 and the fan 48 are both arranged on the side of the ventilation pipeline 401 close to the ground. That is, the heating device 47 and the fan 48 are located at a lower position on the container 1. Because hot air flows upward and cold air flows downward, in the interior circulation state, the hot air generated by the heating device 47 at the lower portion of the container 1 can directly enter the lower position in the container 1, and then flow upward from the lower position in the container 1 to an upper position in the container, to heat up the container 1, thereby improving the heating efficiency of the heating device 47. The fan 48 is located at the lower portion of the container 1 and is in communication with the interior of the container 1, so that the air flow rate in the air duct can be accelerated by wind during air drawing, thereby further improving the air circulation efficiency.

Optionally, referring to FIG. 11 to FIG. 14, the reversing device 402 includes a housing 45 and a reversing plate 46; and the reversing plate 46 is arranged in the housing 45 and is rotatably connected to the housing 45, and the reversing plate 46 rotates in the housing 45 to communicate different air openings with each other.

Specifically, the reversing device 402 includes the housing 45 and the reversing plate 46. Hardness and rigidity of the housing 45 are relatively good. The housing 45 is of a closed structure other than a part of the air openings, that is, the air only enters and exits the housing 45 through the air openings. The reversing plate 46 is a rigid plate and is arranged in the housing 45. Two ends of the reversing plate 46 are rotatably connected to an inner wall of the housing 45. For example, a shaft base may be arranged on the inner wall of the housing 45, and the reversing plate 46 is rotatably connected to the shaft base, so that the reversing plate can rotate in the housing 45. When the reversing plate 46 is at the position shown in FIG. 4, the first air opening 41 may be in communication with the third air opening 43, and the second air opening 42 may be in communication with the fourth air opening 44, so that the air circulation device is in the interior circulation state. When the reversing plate 46 is at the position shown in FIG. 5, the first air opening 41 may be in communication with the fourth air opening 44, and the second air opening 42 may be in communication with the third air opening 43, so that the air circulation device is in the exterior circulation state.

Optionally, referring to FIG. 13 and FIG. 14, in the interior circulation state or the exterior circulation state, two ends of the reversing plate 46 abut against an inner wall of the housing 45.

Specifically, in a process that the air circulation device circulates air for the container 1, regardless of whether the air circulation device is in the interior circulation state or the exterior circulation state, the two ends of the reversing plate 46 abut against the inner wall of the housing 45, to divide the housing 45 into two channels, and air in the two channels is isolated from each other, thereby avoiding a wind leakage phenomenon, and improving the air circulation efficiency.

Optionally, seal gaskets are arranged at the two ends of the reversing plate 46.

Specifically, seal gaskets are arranged at the two ends of the reversing plate 46. The seal gaskets may be rubber pads, silicone pads, resin pads, foam pads, or the like and have a certain elasticity. After the two ends of the reversing plate 46 abut against the housing 45, the seal gaskets can seal gaps between the two ends of the reversing plate 46 and the housing 45, thereby further enhancing an effect of isolating air between the two channels and improving the air circulation efficiency.

Finally, it should be further noted that, the relational terms herein such as first and second are used only to differentiate an entity or operation from another entity or operation, and do not require or imply any actual relationship or sequence between these entities or operations. In addition, the terms "include", "comprise", and any other variants are intended to cover non-exclusive inclusion, so that a process, a method, an object, or a terminal device that includes a series of elements not only includes such elements, but also includes other elements not expressly listed, or further includes elements inherent to the process, the method, the object, or the terminal device. If no more limitations are made, an element limited by "include a/an..." does not exclude other same elements existing in the process, the method, the object, or the terminal device which includes the element.

The foregoing descriptions are merely preferred embodiments of the present invention, but are not intended to limit the present invention. Any modification, equivalent replacement, or improvement made within the spirit and principle of the present invention shall fall within the protection scope of the present invention.

## Claims

1. A container, comprising a bottom base, an upper cover, a first side plate, and a driving device, wherein
the first side plate is arranged between the bottom base and the upper cover, and is connected to the bottom base and the upper cover separately; and
the driving device is connected to the first side plate and is configured to drive the first side plate to rotate relative to the bottom base, and the first side plate drives the upper cover to move, to switch the container from a closed state to an open state.

2. The container according to claim 1, wherein the container further comprises a second side plate, and the upper cover comprises a first cover plate and a second cover plate;
the second side plate is arranged opposite to the first side plate, and is connected to the bottom base and the upper cover separately; and
the driving device is connected to the second side plate and is configured to drive the second side plate to rotate relative to the bottom base, and the second side plate drives the upper cover to move, to switch the container from the closed state to the open state, wherein
the first side plate is connected to the first cover plate to drive the first cover plate to move, and the second side plate is connected to the second cover plate to drive the second cover plate to move.

3. The container according to claim 2, wherein the driving device comprises a first driving mechanism and a second driving mechanism; and
the first driving mechanism is connected to the first side plate, and the second driving mechanism is connected to the second side plate.

4. The container according to claim 2, wherein seal gaskets are arranged on opposite surfaces of the first cover plate and the second cover plate.

5. The container according to claim 2, wherein the first side plate is hingedly connected to the first cover plate, and the second side plate is hingedly connected to the second cover plate.

6. The container according to claim 5, wherein the container further comprises a first linkage mechanism and a second linkage mechanism;
the first linkage mechanism comprises the first side plate and the first cover plate, and the second linkage mechanism comprises the second side plate and the second cover plate; and
during rotation of the first side plate and the second side plate, the first cover plate and the second cover plate are in a horizontal state.

7. The container according to claim 6, wherein the first linkage mechanism further comprises a first fixing rod and a first connecting rod, and the second linkage mechanism further comprises a second fixing rod and a second connecting rod;
the first side plate, the first fixing rod, the first connecting rod, and the first cover plate are hingedly connected to each other sequentially, wherein the first fixing rod is fixedly connected to the bottom base; and
the second side plate, the second fixing rod, the second connecting rod, and the second cover plate are hingedly connected to each other sequentially, wherein the second fixing rod is fixedly connected to the bottom base.

8. The container according to claim 3, wherein the container further comprises a mounting frame, and the bottom base, the upper cover, the first side plate, the second side plate, and the driving device are all mounted on the mounting frame;
the driving device is a hydraulic cylinder comprising a cylinder sleeve and a piston rod arranged in the cylinder sleeve; and
the cylinder sleeve is fixedly connected to the mounting frame, and the piston rod is fixedly connected to the first side plate and the second side plate separately.

9. The container according to claim 8, wherein the mounting frame comprises four vertical columns and two cross beams;
every two of the four vertical columns are arranged opposite to each other, and the two cross beams are arranged between the opposite vertical columns and are fixedly connected to the vertical columns; and
the two cross beams are parallel to each other and are located at a bottom portion of the mounting frame.

10. The container according to claim 9, wherein the mounting frame further comprises a reinforcing beam, and the reinforcing beam is arranged between the opposite vertical columns and is fixedly connected to the vertical columns; and
the reinforcing beam is parallel to the cross beams and is located at the bottom portion of the mounting frame.

11. A hydrogen production system, comprising a hydrogen production device and the container according to any one of claims 1 to 10, wherein the hydrogen production device is placed in the container; and
the hydrogen production device comprises an electrolytic cell, and the electrolytic cell is configured to produce hydrogen.

12. The hydrogen production system according to claim 11, wherein the container further comprises a mounting frame and an end plate; and
the end plate is arranged at an end portion at which the electrolytic cell is located, and the end plate is movably connected to the mounting frame.

13. The hydrogen production system according to claim 12, wherein the hydrogen production system further comprises a first support member and a second support member;
the first support member and the second support member are arranged opposite to each other at two ends of the electrolytic cell and are configured to support the electrolytic cell; and
the first support member is fixedly connected to the mounting frame, and the second support member is movably connected to the mounting frame.

14. The hydrogen production system according to claim 13, wherein the second support member is slidably connected to the mounting frame.

15. The hydrogen production system according to claim 13, wherein an insulating layer is arranged on a surface of the first support member abutting against the electrolytic cell and a surface of the second support member abutting against the electrolytic cell, or an insulating plate is arranged between the electrolytic cell and each of the first support member and the second support member.

16. The hydrogen production system according to claim 11, wherein the container comprises at least two layers of container bodies, the hydrogen production device further comprises a gas-liquid separator, and the gas-liquid separator is configured for gas-liquid separation; and
the electrolytic cell and the gas-liquid separator are arranged in container bodies at different layers.

17. The hydrogen production system according to claim 16, wherein the container comprises a first container body and a second container body, the first container body and the second container body are stacked, and the first container body is located at a bottom layer; and
the electrolytic cell is arranged in the first container body, and the gas-liquid separator is arranged in the second container body.

18. The hydrogen production system according to claim 17, wherein the hydrogen production device further comprises a scrubber, the scrubber is arranged in the second container body and is connected to the gas-liquid separator, and the scrubber is configured to scrub gas from the gas-liquid separator.

19. The hydrogen production system according to claim 17, wherein the hydrogen production system further comprises an escalator, and the escalator extends to an end portion of the second container body; and
an access door is arranged at a position on the end portion of the second container body close to the escalator.

20. The hydrogen production system according to claim 17, wherein the hydrogen production device further comprises an alkaline liquor cooler and an alkaline liquor circulating pump; and
the alkaline liquor cooler and the alkaline liquor circulating pump are arranged in the first container body and in communication with the electrolytic cell.

21. The hydrogen production system according to claim 20, wherein the electrolytic cell, the alkaline liquor cooler, and the alkaline liquor circulating pump are horizontally arranged in the first container body sequentially.

22. The hydrogen production system according to claim 21, wherein the hydrogen production device further comprises a control device, and the control device is arranged between the alkaline liquor cooler and a side wall of the first container body.

23. The hydrogen production system according to claim 21, wherein the first container body comprises a first accommodating portion and a second accommodating portion;
the electrolytic cell is arranged in the first accommodating portion, and the alkaline liquor cooler and the alkaline liquor circulating pump are both arranged in the second accommodating portion; and
an access door is arranged on a side of the first accommodating portion close to the second container body, and an access door is arranged on a side wall of the second accommodating portion.

24. The hydrogen production system according to claim 23, wherein a projection of the second container body along a vertical direction is located in the second accommodating portion.

25. The hydrogen production system according to claim 23, wherein the second accommodating portion is in communication with an interior of the second container body.

26. The hydrogen production system according to claim 17, wherein a size of the first container body along a horizontal direction ranges from 12 m to 13 m, and a size of the first container body along a vertical direction ranges from 2 m to 3 m.

27. The hydrogen production system according to any one of claims 16 to 26, wherein the hydrogen production system further comprises an air circulation device, and the air circulation device is configured to communicate air in the container with external air.

28. The hydrogen production system according to claim 27, wherein the air circulation device comprises a ventilation pipeline and a reversing device;
the reversing device is arranged at an end portion of the ventilation pipeline, an air duct for air circulation is formed between the reversing device and the ventilation pipeline, and the air duct is configured to provide circulating ventilation for the container;
the reversing device is provided with a plurality of air openings, and the reversing device switches between the different air openings to cause the air circulation device to be in an interior circulation state or an exterior circulation state; and
in the interior circulation state, the air in the container is isolated from the external air, and in the exterior circulation state, the air in the container is in communication with the external air.

29. The hydrogen production system according to claim 28, wherein the plurality of air openings comprise a first air opening, a second air opening, a third air opening, and a fourth air opening;
the first air opening and the second air opening are opposite to each other, and the third air opening and the fourth air opening are opposite to each other;
the first air opening is configured to be in communication with the container, the third air opening is configured to be in communication with the ventilation pipeline, and the second air opening and the fourth air opening are configured to be in communication with the external air;
in the interior circulation state, the first air opening is in communication with the third air opening, and the second air opening is in communication with the fourth air opening; and
in the exterior circulation state, the first air opening is in communication with the fourth air opening, and the second air opening is in communication with the third air opening.

30. The hydrogen production system according to claim 29, wherein the second air opening and the third air opening are each connected to a filter screen.

31. The hydrogen production system according to claim 28, wherein the air circulation device further comprises a heating device; and
the heating device is in communication with the ventilation pipeline, and in the interior circulation state, the heating device heats air in the air duct.

32. The hydrogen production system according to claim 31, wherein the air circulation device further comprises a fan; and
the fan is in communication with the ventilation pipeline, and the fan is configured to draw air from the air openings.

33. The hydrogen production system according to claim 32, wherein the ventilation pipeline is a vertical pipeline, and the heating device and the fan are both arranged on a side of the ventilation pipeline close to ground.

34. The hydrogen production system according to claim 29, wherein the reversing device comprises a housing and a reversing plate; and
the reversing plate is arranged in the housing and is rotatably connected to the housing, and the reversing plate rotates in the housing to communicate different air openings with each other.

35. The hydrogen production system according to claim 34, wherein in the interior circulation state or the exterior circulation state, two ends of the reversing plate abut against an inner wall of the housing.

36. The hydrogen production system according to claim 35, wherein seal gaskets are arranged at the two ends of the reversing plate.
